# EUROPEAN PATENT SPECIFICATION

(11) **EP 1 749 633 B1**
(45) Date of publication and mention of the grant of the patent: **12.11.2008**
(21) Application number: 06015097.6
(22) Date of filing: 20.07.2006
(51) Int. Cl.: B29C 39/12, F16J 15/10

(54) **Method for manufacturing a flexible wear-resistant part of layered polyurethane and product manufactured in accordance with said method**
Verfahren zur Herstellung eines flexiblen, verschleissfesten Gegenstandes aus mehrschichtigem Polyurethan und durch das Verfahren hergestellter Gegenstand
Procédé pour la fabrication d'un objet flexible résistant à l'usure en polyuréthanne stratifié et produit fabriqué par ce procédé

(30) Priority: 03.08.2005 NL 1029670
(43) Date of publication of application: 07.02.2007
(73) Proprietor: Herikon B.V., 7601PS Almelo (NL); Timro Technical Components and Services B.V., 4705 AG Roosendaal (NL)
(72) Inventor: Zengerink, Hendrikus Johannes, 7558 ND Hengelo (NL); Tims, Wouter, 4328 PZ Westenschouwen (NL)
(74) Representative: Bakker, Hendrik

(56) References cited:
- DE-A1- 19 622 782
- FR-A- 2 766 099
- US-A- 3 873 407
- US-A- 5 271 118
- US-A- 5 567 019

## Description

The present invention relates to a method for manufacturing a flexible wear-resistant part of layered polyurethane.

US 5,271,118 describes a method of the type as mentioned above, wherein two layers of the same type of polyurethane, one additive-free layer and one layer with embedded polyethylene particles, are cast in the same mould to form a plastic packing ring. Due to the polyethylene particles the outer layer of the ring shows enhanced wear resistance and enhanced friction reduction.

The plastic polyurethane combines a high strength and stiffness with high elasticity and is therefore highly suitable as raw material for wear-resistant parts for diverse fields of application.

The abovementioned properties of polyurethane could be even better utilized by combining different types of polyurethane of differing hardness with each other. It is however generally known in the field that different types of polyurethane of differing hardness adhere poorly to each other, thereby making the manufacture of layered polyurethane difficult. After manufacture, products in practice soon also display cracks on the interface between the different types of polyurethane.

Applicant has developed a method of the type stated in the preamble which obviates these drawbacks.

The method according to the invention comprises the following steps of:
a) pouring into a mould for the wear-resistant part a quantity of polyurethane of a first type with a first hardness in order to form a first layer;
b) allowing the first layer of polyurethane to cure for a certain time;
c) pouring over the first layer of polyurethane a part of a quantity of polyurethane of a second type with a second hardness which differs from the first hardness in order to form a partial layer of polyurethane of the second type;
d) allowing the partial layer of polyurethane of the second type to cure for a certain time;
e) pouring the rest of the quantity of polyurethane of the second type over the partial layer in order to complete the second layer; and
f) allowing curing of the moulded wear-resistant part.

A good and rapid adhesion of two types of polyurethane is obtained when the part for forming the partial layer amounts to 5 to 25% by weight of the total quantity of polyurethane of the second type.

The wear resistance and the mechanical properties of the polyurethane of the first type can be further enhanced in advantageous manner by adding one or more additives, carbides or a mixture thereof. Step a) of the method then comprises the following steps of:
a1) measuring off a part of the quantity of polyurethane of the first type;
a2) adding at least one additive to the part of polyurethane of the first type;
a3) pouring into the mould the part of polyurethane of the first type with the additive in order to form a partial layer of polyurethane of the first type;
a4) allowing the partial layer of polyurethane of the first type to cure for a certain time; and
a5) pouring the rest of the quantity of polyurethane of the first type over the partial layer in order to complete the first layer.

A good and rapid adhesion of the two types of polyurethane, one of these with additive, is obtained when the part for forming the partial layer amounts to 5 to 25% by weight of the quantity of polyurethane of the first type.

In a further preferred embodiment the method further comprises the step of arranging one or more insert elements at predetermined positions in the mould. The form stability and the mechanical properties of the wear-resistant part to be manufactured can be modified by means of the insert elements.

The polyurethane of the first type preferably comprises TDI polyurethane with a hardness in the range between 80° Shore A and 75° Shore D.

The polyurethane of the second type preferably comprises MDI polyurethane with a hardness in the range between 35° Shore A and 95° Shore A.

Suitable additives include tungsten carbide or silicon carbide or a mixture thereof, preferably in a proportion of 10 to 20% by weight of the part for forming the partial layer of polyurethane of the first type.

The invention also relates to a wear-resistant part manufactured in accordance with the method according to the invention. In a first preferred embodiment the wear-resistant part is a sealing ring for a closing device of a transport pipeline for liquid material.

The invention will now be discussed in more detail with reference to the drawings, in which
Figure 1A shows a schematic section of a first wear-resistant part manufactured in accordance with a first preferred embodiment of the method according to the invention;
Figure 1B shows a schematic section of a variant of the first wear-resistant part of figure 1A;
Figure 2A is a schematic section of a second wear-resistant part manufactured in accordance with a second preferred embodiment of the method according to the invention; and
Figure 2B shows a schematic section of a variant of the second wear-resistant part of figure 2A.

Like components are designated in the figures by means of the same reference numerals.

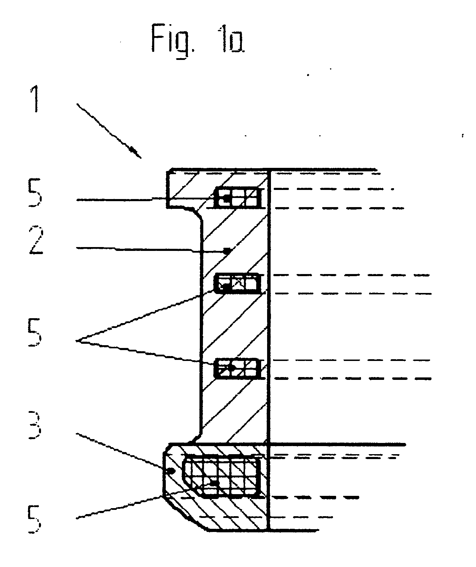

Figure 1A shows a first preferred embodiment of a sealing element, such as a sealing ring 1 for a slide closure or closing valve in a transport pipeline for liquid material which may or may not be abrasive and/or clogging material. Sealing ring 1 comprises a hollow body 2 of a generally cylindrical shape. Situated at an outer end of body 2 is a nose ring 3 which during use lies against the slide or valve of the closing device.

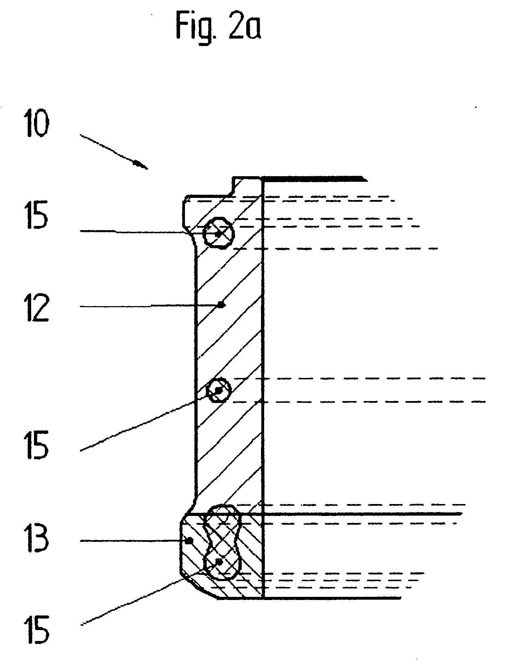

Figure 2A shows a second preferred embodiment of a sealing element 10. Sealing ring 10 comprises a hollow body 12 of a generally cylindrical shape. Situated at an outer end of body 12 is a nose ring 13 which during use lies against the slide or valve of the closing device.

Sealing rings 1 and 10 both comprise insert elements 5, 15 respectively. The insert elements are co-moulded objects of a foreign material, generally referred to in the field as "inlays". Some examples of suitable insert elements are: metal rings, air chambers, foam rubber etc. Through use of suitable insert elements diverse properties of the sealing ring can be modified to the intended application, such as the form stability, strength, rigidity, coefficient of friction etc. In the shown preferred embodiment the respective insert elements 5, 15 are steel rings. Sealing ring 10 is distinguished from sealing ring 1 as described above by the different form of insert elements 15 compared to insert elements 5.

According to the invention nose ring 3 is moulded from polyurethane of a first type with a first hardness. An example of a suitable type of polyurethane of the first type is toluene diisocyanate (TDI) with a hardness of 95° Shore A. Body 2 is moulded according to the invention from polyurethane of a second type with a second hardness which is lower than the first hardness. An example of a suitable type of polyurethane of the second type is methane diphenyl diisocyanate (MDI) with a hardness of 60° Shore A.

Sealing rings 1, 10 manufactured from the layered polyurethane according to the invention have an elastic body 2, 12 which can follow the movements of the slide closure or closing valve and which is itself resistant to wear by passing abrasive material. At the position of nose ring 3, 13 the wear resistance is greatest so as to be able to withstand the movement of the slide or valve of the closing device. Sealing ring 1, 10 protects the housing of the closing device optimally from wear caused by the passing abrasive material.

Example A describes the manufacture of sealing ring 1, 10 of figure 1A and 2A respectively in accordance with the method according to the invention.

### EXAMPLE A

Insert elements 5, 15 are arranged at predetermined positions, for instance at equidistant positions, in a selected mould. The mould is then preheated in the manner usual in the field. A quantity of TDI polyurethane 95° Shore A is poured into the mould. For a sealing ring the quantity of TDI polyurethane varies between substantially 100 grams and 10 kilograms, depending on the intended dimensions of the sealing ring. In the remainder of example A use is made of a quantity of 1000 grams of TDI polyurethane.

The poured layer of TDI polyurethane must cure for a predetermined time which varies substantially between 2 and 6 minutes.

A part of a quantity of MDI polyurethane 60° Shore A is subsequently poured over the first layer of TDI polyurethane in order to form a part of a second layer, or a partial layer. For a sealing ring the quantity of MDI polyurethane generally varies between substantially 1000 grams and 60 kilograms, depending on the intended dimensions of the sealing ring. In the remainder of example A use is made of a quantity of MDI polyurethane of 3500 grams. The part for forming the partial layer amounts to substantially 5 to 25% by weight of the quantity of MDI polyurethane. Use is made in this example of 10% by weight, or 350 grams.

The poured partial layer of MDI polyurethane must cure for a predetermined time, which varies substantially between 8 and 12 minutes.

The remaining part of the quantity of MDI polyurethane, which part amounts in this example to 3150 grams, is poured for completion purposes over the already poured partial layer of MDI polyurethane.

Finally, the thus completed wear-resistant part must cure. This curing takes place in an oven in the manner which is per se usual for polyurethane in the field.

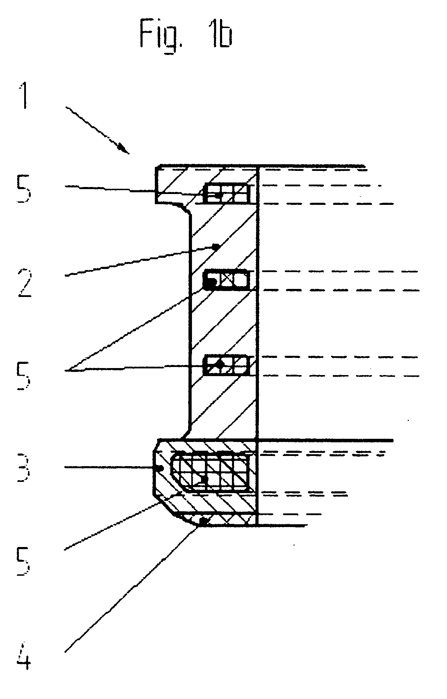

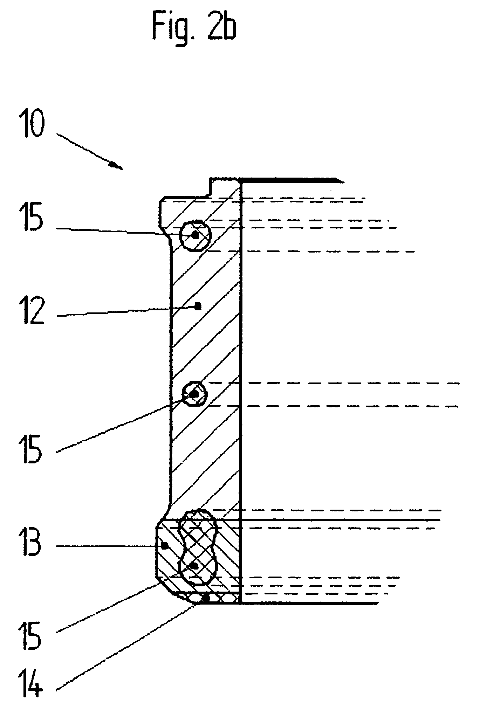

Figure 1B shows a variant of sealing ring 1. Figure 2B shows a variant of sealing ring 10. In the shown variants sealing rings 1, 10 are provided with a nose ring 3, 13 respectively with an additionally strengthened front part 4, 14 respectively. This is achieved according to the invention by adding to the polyurethane of the first type one or more additives or carbides or a mixture thereof. Suitable additives are for instance: tungsten carbide or silicon carbide or a mixture thereof. The wear resistance of such an additionally strengthened nose ring is even greater, and the coefficient of friction lower, due to the addition of these additives.

The shown variants are otherwise wholly similar to the original sealing rings 1 and 10 of figures 1A and 2A.

Example B describes the manufacture of the variants, shown in figure 1B and 2B, of the sealing ring 1,10 respectively in accordance with the method according to the invention.

### EXAMPLE B

Insert elements 5, 15 are arranged at predetermined positions, for instance at equidistant positions, in a selected mould. The mould is preheated in the manner usual in this field. A quantity of TDI polyurethane 95° Shore A is measured off. In example B use is made of a quantity of 1000 grams.

A part of the quantity of 1000 grams TDI polyurethane is measured off in order to form a part of a first layer, or a partial layer. This part preferably amounts to substantially 5 to 25% by weight. In this example the part is 250 grams.

The additive is added to the part of TDI polyurethane. The amount of additive generally amounts to 5 to 25% by weight of the part of TDI polyurethane. In this example use is made of 10% by weight and the amount of additive amounts to 25 grams.

The part of TDI polyurethane with additive is poured into the mould.

The poured partial layer of TDI polyurethane must cure for a predetermined time, which varies substantially between 2 and 6 minutes.

The remaining part of the quantity of TDI polyurethane, this remaining part amounting in this example to 725 grams, is poured over the already poured partial layer of TDI polyurethane.

The poured layer of TDI polyurethane must cure for a predetermined time, which varies substantially between 2 and 6 minutes.

A part of a quantity of MDI polyurethane 60° Shore A is subsequently poured over the first layer of TDI polyurethane in order to form a part of a second layer, or a partial layer of MDI polyurethane. In example B use is made of a quantity of MDI polyurethane of 3500 grams. The part amounts to substantially 5 to 25% by weight of the quantity of MDI polyurethane. In this example use is made of 10% by weight, or 350 grams.

The poured partial layer of MDI polyurethane must cure for a predetermined time, which varies substantially between 8 and 12 minutes.

The remaining part of the quantity of MDI polyurethane, this remaining part amounting in this example to 3150 grams, is poured for completion purposes over the already poured partial layer of MDI polyurethane.

Finally, the thus completed wear-resistant part must cure. This curing takes place in an oven in the manner which is per se usual for polyurethane in this field.

The invention is not of course limited to the shown and described preferred embodiments. It will be apparent that the method according to the invention is generally suitable for manufacturing layered polyurethane and products thereof. The layered polyurethane comprises a first layer of polyurethane of a first type with a first hardness and a second layer of polyurethane of a second type with a second hardness which differs from the first hardness. In a further embodiment the layer of polyurethane of the first type comprises a partial layer with an additive or carbide. The number of layers of polyurethane can be increased as required. This is also the case for the number of types of polyurethane. The increase in the number of layers and/or the number of polyurethane types can be achieved by repeatedly applying the inventive concept in each case to two different polyurethane types of optionally differing hardness for moulding in adjacent layers. For this purpose steps c), d) and e) of claim 1 must be repeated for each successive layer. After reading of this description a skilled person in the field must be deemed capable of this.

The invention is generally based on the insight that on each preceding ("first") layer of polyurethane a partial layer of each subsequent ("second") layer of polyurethane must first be poured, and that this partial layer, just as the preceding layer, must cure for a certain period of time. This time must be long enough to allow the start of a curing effect to occur in the polyurethane. The time required depends, among other factors, on the mould temperature, the ambient temperature, the temperature of the polyurethane and the air humidity.

It is emphasized for the sake of completeness that the layered polyurethane according to the invention can be applied in wear-resistant parts generally as well as in the stated applications. In addition to the stated application in hydraulic transport, for instance in wear-resistant pipes, wear-resistant bends and also nozzles, it is possible to envisage applications where an increased spring-back elasticity is important, such as buffer blocks, protective profiles, fenders etc.

The invention therefore extends generally to any embodiment which falls within the scope of the appended claims as seen in the light of the foregoing description and drawings.

## Claims

1. Method for manufacturing a flexible wear-resistant part of layered polyurethane, comprising the following steps of:
a) pouring into a mould for the wear-resistant part a quantity of polyurethane of a first type with a first hardness in order to form a first layer;
b) allowing the first layer of polyurethane to cure for a certain time;
c) pouring over the first layer of polyurethane a part of a quantity of polyurethane of a second type with a second hardness which differs from the first hardness in order to form a partial layer of polyurethane of the second type;
d) allowing the partial layer of polyurethane of the second type to cure for a certain time;
e) pouring the rest of the quantity of polyurethane of the second type over the partial layer in order to complete the second layer; and
f) allowing curing of the moulded wear-resistant part.

2. Method as claimed in claim 1, wherein the part for forming the partial layer amounts to 5 to 25% by weight of the quantity of polyurethane of the second type.

3. Method as claimed in claim 1 or 2, wherein step a) comprises the following steps of:
a1) measuring off a part of the quantity of polyurethane of the first type;
a2) adding at least one additive to the part of polyurethane of the first type;
a3) pouring into the mould the part of polyurethane of the first type with the additive in order to form a partial layer of polyurethane of the first type;
a4) allowing the partial layer of polyurethane of the first type to cure for a certain time; and
a5) pouring the rest of the quantity of polyurethane of the first type over the partial layer in order to complete the first layer.

4. Method as claimed in claim 3, wherein the part for forming the partial layer amounts to 5 to 25% by weight of the quantity of polyurethane of the first type.

5. Method as claimed in any of the foregoing claims, further comprising the step of arranging one or more insert elements at predetermined positions in the mould.

6. Method as claimed in any of the foregoing claims, wherein the polyurethane of the first type comprises TDI polyurethane.

7. Method as claimed in any of the foregoing claims, wherein the polyurethane of the first type has a hardness falling substantially in the range between 80° Shore A and 75° Shore D.

8. Method as claimed in any of the foregoing claims, wherein the polyurethane of the second type comprises MDI polyurethane.

9. Method as claimed in any of the foregoing claims, wherein the polyurethane of the second type has a hardness falling substantially in the range between 35° Shore A and 95° Shore A.

10. Method as claimed in any of the foregoing claims 3-9, wherein the additive comprises tungsten carbide or silicon carbide or a mixture thereof.

11. Method as claimed in any of the foregoing claims 3-10, wherein the additive amounts to 10 to 20% by weight of the part for forming the partial layer of polyurethane of the first type.

12. Wear-resistant part manufactured in accordance with the method as claimed in any of the foregoing claims.

13. Wear-resistant part as claimed in claim 12, wherein the wear-resistant part is a sealing ring for a closing device of a transport pipeline for liquid material.

## Patentansprüche

1. Verfahren zur Herstellung eines flexiblen, verschleißfesten Gegenstandes aus mehrschichtigem Polyurethan, welches die folgenden Schritte aufweist:
a) Gießen einer Menge Polyurethan einer ersten Art mit einer ersten Härte in eine Gießform für den verschleißfesten Gegenstand, um eine erste Schicht zu bilden;
b) Aushärten der ersten Polyurethanschicht für eine bestimmte Dauer;
c) Gießen eines Teils einer Menge von Polyurethan einer zweiten Art mit einer zweiten Härte, die sich von der ersten Härte unterscheidet, über die erste Polyurethanschicht, um eine Teilschicht aus Polyurethan der zweiten Art zu bilden;
d) Aushärten der Teilschicht aus Polyurethan der zweiten Art für eine bestimmte Dauer;
e) Gießen der Restmenge an Polyurethan der zweiten Art über die Teilschicht, um die zweite Schicht zu vervollständigen; und
f) Aushärten des gegossenen verschleißfesten Gegenstandes.

2. Verfahren gemäß Anspruch 1, wobei der Teil, um die Teilschicht zu bilden, 5 bis 25 Gew.-% der Menge an Polyurethan der zweiten Art beträgt.

3. Verfahren gemäß Anspruch 1 oder 2, wobei Schritt a) die folgenden Schritte aufweist:
a1) Abmessen eines Teils der Menge an Polyurethan der ersten Art;
a2) Hinzufügen wenigstens eines Additivs zu dem Teil des Polyurethans der ersten Art;
a3) Gießen des Teils an Polyurethan der ersten Art mit dem Additiv in eine Gießform, um eine Teilschicht aus Polyurethan der ersten Art zu bilden;
a4) Aushärten der Teilschicht aus Polyurethan der ersten Art für eine bestimmte Dauer; und
a5) Gießen der Restmenge an Polyurethan der ersten Art über die Teilschicht, um die erste Schicht zu vervollständigen.

4. Verfahren gemäß Anspruch 3, wobei der Teil, um die Teilschicht zu bilden, 5 bis 25 Gew.-% der Menge an Polyurethan der ersten Art beträgt.

5. Verfahren gemäß einem der vorausgegangenen Ansprüche, welches weiter den Schritt des Anordnens eines oder mehrerer Einsetzteile an vorbestimmten Positionen in der Gießform aufweist.

6. Verfahren gemäß einem der vorausgegangenen Ansprüche, wobei das Polyurethan der ersten Art TDI-Polyurethan aufweist.

7. Verfahren gemäß einem der vorausgegangenen Ansprüche, wobei das Polyurethan der ersten Art eine Härte aufweist, die im Wesentlichen im Bereich zwischen 80° Shore A und 75° Shore D liegt.

8. Verfahren gemäß einem der vorausgegangenen Ansprüche, wobei das Polyurethan der zweiten Art MDI-Polyurethan aufweist.

9. Verfahren gemäß einem der vorausgegangenen Ansprüche, wobei das Polyurethan der zweiten Art eine Härte aufweist, die im Wesentlichen im Bereich zwischen 35° Shore A und 95° Shore A liegt.

10. Verfahren gemäß einem der vorausgegangenen Ansprüche 3 bis 9, wobei das Additiv Wolframkarbid oder Siliziumkarbid oder ein Gemisch daraus aufweist.

11. Verfahren gemäß einem der vorausgegangenen Ansprüche 3 bis 10, wobei das Additiv bis zu 10 bis 20 Gew.-% des Teils zum Bilden der Teilschicht aus Polyurethan der ersten Art beträgt.

12. Verschleißfestes Teil, das entsprechend dem Verfahren gemäß einem der vorausgegangenen Ansprüche hergestellt wurde.

13. Verschleißfestes Teil gemäß Anspruch 12, wobei das verschleißfeste Teil ein Dichtungsring für eine Schließvorrichtung einer Rohrleitung zum Transport eines flüssigen Materials ist.

## Revendications

1. Procédé de fabrication d'une pièce souple résistante à l'usure à base de polyuréthane stratifié, comprenant les étapes suivantes, consistant à :
a) verser dans un moule destiné à la pièce résistante à l'usure une quantité de polyuréthane d'un premier type, ayant une première dureté, afin de former une première couche ;
b) laisser la première couche de polyuréthane durcir pendant un certain temps ;
c) verser sur la première couche de polyuréthane une partie d'une quantité de polyuréthane d'un second type ayant une seconde dureté qui diffère de la première dureté afin de former une couche partielle de polyuréthane du second type ;
d) laisser la couche partielle de polyuréthane du second type durcir pendant un certain temps ;
e) verser le reste de la quantité de polyuréthane du second type sur la couche partielle afin de terminer la seconde couche ; et
f) laisser durcir la pièce résistante à l'usure moulée.

2. Procédé selon la revendication 1, dans lequel la partie destinée à former la couche partielle représente entre 5 et 25 % en poids de la quantité de polyuréthane du second type.

3. Procédé selon les revendications 1 ou 2, dans lequel l'étape a) comprend les étapes suivantes consistant à :
a1) mesurer une partie de la quantité de polyuréthane du premier type ;
a2) ajouter au moins un additif à la partie de polyuréthane du premier type ;
a3) verser dans le moule la partie de polyuréthane du premier type avec l□ additif, afin de former une couche partie polyuréthane du premier type ;
a4) laisser la couche partielle de polyuréthane du premier type durcir pendant un certain temps ; et
a5) verser le reste de la quantité de polyuréthane du premier type sur la couche partielle afin de terminer la première couche.

4. Procédé selon la revendication 3, dans lequel la partie destinée à former la couche partielle représente entre 5 et 25 % en poids de la quantité de polyuréthane du premier type.

5. Procédé selon l'une des revendications précédentes comprenant en outre l□étape consistant à agencer un ou plusieurs inserts dans des positions prédéterminées à l intérieur du moule.

6. Procédé selon l'une des revendications précédentes, dans lequel le polyuréthane du premier type comprend du polyuréthane TDI.

7. Procédé selon l'une des revendns précédentes, dans lequel le polyuréthane du premier type a une dureté comprise sensiblement dans la fourchette située entre 80° Shore A et 75° Shore D.

8. Procédé selon l'une des revendications précédentes, dans lequel le polyuréthane du second type comprend du polyuréthane MDI.

9. Procédé selon l'une des revendications précédentes, dans lequel le polyuréthane du premier type a une dureté comprise sensiblement dans la fourchette située entre 35° Shore A et 95° Shore A.

10. Procédé selon l'une evendications précédentes 3 à 9, dans lequel lequel l'additif comprend du carbure de tungstène or du carbure de silicium ou un mélange de ceux-ci.

11. Procédé selon l'une revendications précédentes 3 à 10, dans lequel la quantité d'additif est de 10 à en poids de la partie destinée à former la couche partielle de polyuréthane du premier type.

12. Pièce résistante à l'usure fabriquée selon le procédé selon l□ une quelconque des revendications précédentes.

13. Pièce résistante à l'usure selon la dication 12, dans laquelle la pièce résistante à l'usure est une bague d'étanchéité destinée à un dispositif de fermeture d'une conduite de transport d'un matériau liquide
